# EUROPEAN PATENT SPECIFICATION

(11) **EP 3 842 186 B1**
(45) Date of publication and mention of the grant of the patent: **28.09.2022**
(21) Application number: 20213483.9
(22) Date of filing: 11.12.2020
(51) Int. Cl.: B25F 1/00, B25F 5/00

(54) **ADAPTER AND POWER TOOL SYSTEM**
ADAPTER UND ELEKTROWERKZEUGSYSTEM
ADAPTATEUR ET SYSTÈME D'OUTIL ÉLECTRIQUE

(30) Priority: 12.12.2019 CN 201911271738
(43) Date of publication of application: 30.06.2021
(73) Proprietor: Globe (Jiangsu) Co., Ltd., Zhonglou District Changzhou, Jiangsu 213023 (CN)
(72) Inventor: HUANG, Lei, Changzhou, Jiangsu 213023 (CN); GUO, Xinzhong, Changzhou, Jiangsu 213023 (CN); YAN, An, Changzhou, Jiangsu 213023 (CN)
(74) Representative: Bergenstråhle & Partners AB

(56) References cited:
- US-A- 6 104 162
- US-A1- 2013 154 584
- US-A1- 2019 312 242

## Description

### Technical Field

The invention relates to an adapter and a power tool system with the adapter.

### Background Art

Generally, different power tools, such as hand-held blowers, hand-held electric drills, and the like, have different rated working voltages, therefore, manufacturers need to configure each power tool with a corresponding battery pack. Examples are known from US6104162A and US2019/312242A1. When there are a various power tools, user must equip with a plurality of battery packs in various specifications. Therefore, the cost is increased, and a large space is occupied for storing the battery packs. Secondly, different power tools have different frequency of utilization. For example, handheld blowers are typically used more frequently in autumn and less frequently in other seasons. Moreover, different users have different use frequency for different power tools. For example, some users use the blowers frequently, and use the electric drill occasionally. Therefore, the battery pack matched with the electric drill is in an idle state for a long time, and resource waste is caused.

In order to solve the problems, technicians have designed a multi-voltage battery pack with a multi-voltage battery interface and a power tool with a power tool interface for coupling with the multi-voltage battery interface. The multi-voltage battery interface has multiple coupling states so as to output different voltages through different coupling states, thereby the multi-voltage battery pack can be matched with multiple power tools. However, user still has a plurality of single voltage battery packs which are matched with old power tools. The single voltage battery pack has a single voltage battery interface which is matched with an old input interface of the old power tool and only can output a single voltage. The single voltage battery interface of the single voltage battery pack is not couplable with the power tool interface of new power tools, so that user's existing single voltage battery pack is idle, that causes waste of resources.

In view of the above, there is a need for an adapter to solve the above problems.

### Summary of Invention

The object of the present disclosure is to provide an adapter, which can connect a power tool interface of a power tool with a signal voltage battery interface of a single voltage battery pack, so that the power tool being couplable with the multi-voltage battery pack can match with the existing single voltage battery pack, and an application range of the single voltage battery pack is expanded to avoid waste of resources.

In order to achieve the above object, the present disclosure provides an adapter for connecting a single voltage battery pack to a power tool, the single voltage battery pack configured to output only one voltage and provided with a single voltage battery interface, the power tool detachably coupled with a multi-voltage battery pack and provided with a power tool interface, the single voltage battery interface being not couplable to the power tool interface, the adapter comprises: a housing, an input interface disposed in the housing and provided for electrically and mechanically coupling with the single voltage battery interface of the single voltage battery pack, an output interface disposed in the housing and provided for electrically and mechanically coupling with the power tool interface of the power tool, the input interface electrically connected with the output interface, wherein the power tool can be powered by the single voltage battery pack through the adapter.

In one embodiment, wherein the housing further forms an inserting portion on a side thereof away from the output interface for sliding inserting the single voltage battery interface of the single voltage battery pack.

In one embodiment, wherein the housing comprises a top wall, a bottom wall opposite to the top wall, a front wall close to the output interface, a rear wall opposite to the front wall and two side walls located at two sides of the top wall, and the side wall is further provided with a sliding rail on a side thereof facing the inserting portion.

In one embodiment, wherein the top wall, the bottom wall, the front wall, the rear wall and the side walls cooperatively surround and define a receiving cavity, an input terminal groove communicated with the receiving cavity is formed between the front wall and the bottom wall, and the input interface is mounted in the input terminal groove.

In one embodiment, wherein the input interface comprises a first input terminal, a second input terminal, a third input terminal and a fourth input terminal, wherein the second input terminal and the third input terminal are positioned between the first input terminal and the fourth input terminal; the output interface comprises a first output terminal, a second output terminal, a third output terminal and a fourth output terminal, wherein the second output terminal and the third output terminal are positioned between the first output terminal and the fourth output terminal; the first input terminal is electrically connected to the first output terminal, and the fourth input terminal is electrically connected to the fourth output terminal.

In one embodiment, wherein the adapter further comprises a housing and a latching mechanism mounted on the housing; the housing is provided with a receiving cavity; the latching mechanism comprises a latching arm and a pressing arm, the latching arm is partially received in the receiving cavity and partially protrudes outside of the receiving cavity, the pressing arm is linked with the latching arm and partially protrudes out of the receiving cavity, the latching arm enters into the receiving cavity when the pressing arm is pressed on.

In one embodiment, wherein the latching mechanism also comprises an elastic element matched with the pressing arm or the latching arm; the elastic element is elastically deformed when the pressing arm is pressed; and the pressing arm or the latching arm resets under an action of the elastic element when the pressing arm is released.

In one embodiment, wherein a guiding wall is obliquely arranged on a side of the latching arm facing the output interface.

In order to achieve the above object, the present disclosure also provides a power tool system comprises a power tool provided with a power tool interface for coupling with a multi-voltage battery pack, a single voltage battery pack configured to output only one voltage and provided with a single voltage battery interface, the single voltage battery interface being not couplable with the power tool interface, an adapter, the adapter comprises a housing, an input interface disposed in the housing and provided for electrically and mechanically coupling with the single voltage battery interface of the single voltage battery pack, an output interface disposed in the housing and provided for electrically and mechanically coupling with the power tool interface of the power tool, the input interface electrically connected with the output interface, wherein the power tool can be powered by the single voltage battery pack through the adapter.

In one embodiment, wherein the housing forms an inserting portion on a side thereof away from the output interface for sliding inserting the single voltage battery interface of the single voltage battery pack.

In one embodiment, wherein the housing comprises a top wall, a bottom wall opposite to the top wall, a front wall close to the output interface, a rear wall opposite to the front wall and two side walls located at two sides of the top wall, and the side wall is further provided with a sliding rail on a side thereof facing the inserting portion.

In one embodiment, wherein the top wall, the bottom wall, the front wall, the rear wall and the side walls cooperatively surround and define a receiving cavity, an input terminal groove communicated with the receiving cavity is formed between the front wall and the bottom wall, and the input interface is mounted in the input terminal groove.

In one embodiment, wherein the input interface comprises a first input terminal, a second input terminal, a third input terminal and a fourth input terminal, wherein the second input terminal and the third input terminal are positioned between the first input terminal and the fourth input terminal; the output interface comprises a first output terminal, a second output terminal, a third output terminal and a fourth output terminal, wherein the second output terminal and the third output terminal are positioned between the first output terminal and the fourth output terminal; the first input terminal is electrically connected to the first output terminal, and the fourth input terminal is electrically connected to the fourth output terminal.

In one embodiment, wherein the adapter further comprises a housing and a latching mechanism mounted on the housing; the housing is provided with a receiving cavity; the latching mechanism comprises a latching arm and a pressing arm, the latching arm is partially received in the receiving cavity and partially protrudes outside of the receiving cavity, the pressing arm is linked with the latching arm and partially protrudes out of the receiving cavity, the latching arm enters into the receiving cavity when the pressing arm is pressed on.

In one embodiment, wherein the latching mechanism also comprises an elastic element matched with the pressing arm or the latching arm; the elastic element is elastically deformed when the pressing arm is pressed; and the pressing arm or the latching arm resets under an action of the elastic element when the pressing arm is released.

In one embodiment, wherein a guiding wall is obliquely arranged on a side of the latching arm facing the output interface.

In order to achieve the above object, the present disclosure also provides a power tool system comprising a multi-voltage battery pack configured to output at least two different voltages, a power tool provided with a power tool interface for electrically and mechanically coupling with the multi-voltage battery pack, a single voltage battery pack configured to output only one voltage and provided with a single voltage battery interface, the single voltage battery interface being not couplable with the power tool interface, an adapter, the adapter comprises a housing, an input interface disposed in the housing and provided for electrically and mechanically coupling with the single voltage battery interface of the single voltage battery pack, an output interface disposed in the housing and provided for electrically and mechanically coupling with the power tool interface of the power tool, the input interface electrically connected with the output interface, wherein the power tool can be powered by the single voltage battery pack through the adapter.

The beneficial effect of the present disclosure is that: the adapter of the present disclosure can connect a power tool interface of a power tool being couplable with a multi-voltage battery pack with a single voltage battery interface of a single voltage battery pack, so that the power tool can use the single voltage battery pack, an application range of the single voltage battery pack is expanded to avoid waste of resources.

### Brief description of drawings

FIG. 1 is a perspective view of an adapter according an embodiment of the present disclosure.
FIG. 2 is another perspective view of the adapter shown in FIG. 1 from another angle.
FIG. 3 is a perspective view of a housing of the adaptor shown in FIG. 1.
FIG. 4 is another perspective view of the housing shown in FIG. 3 from another angle.
FIG. 5 is another perspective view of the housing shown in FIG. 3 from another angle.
FIG. 6 is a view showing a connection between an input interface of the adaptor and an output interface of the adaptor.
FIG. 7 is a perspective view of a latching mechanism of the adaptor.
FIG. 8 is a perspective view of a single voltage battery pack.
FIG. 9 is a perspective view showing how a power tool, the adapter, and the single voltage battery pack are coupled with each other.

### Description of embodiment

In order to make the objectives, technical solutions, and advantages of the present disclosure clearer, the following describes the present disclosure in detail with reference to accompanying drawings and specific embodiment.

Different power tools, such as hand-held blowers, hand-held electric drills, and the like, have different rated working voltages, therefore, manufacturers need to configure each power tool with a single voltage battery pack. Such single voltage battery pack can only output one voltage, thereby only being able to match with a single type of power tool whose rated working voltage is the same as the output voltage of the single voltage battery pack but not with power tools having different rated working voltages. So technicians designed a battery pack with a multi-voltage output interface and a new power tool with a new interface for coupling with the multi-voltage output interface. The multi-voltage output interface has at least two coupling states so as to output different voltages through different coupling states, thereby the multi-voltage battery pack can match with various power tools having corresponding rated working voltages. However, an output interface of the single voltage battery pack is incompatible with the interface of the power tool which can mate with the multi-voltage battery pack, so that user's existing single voltage battery pack is idle, that causes waste of resources.

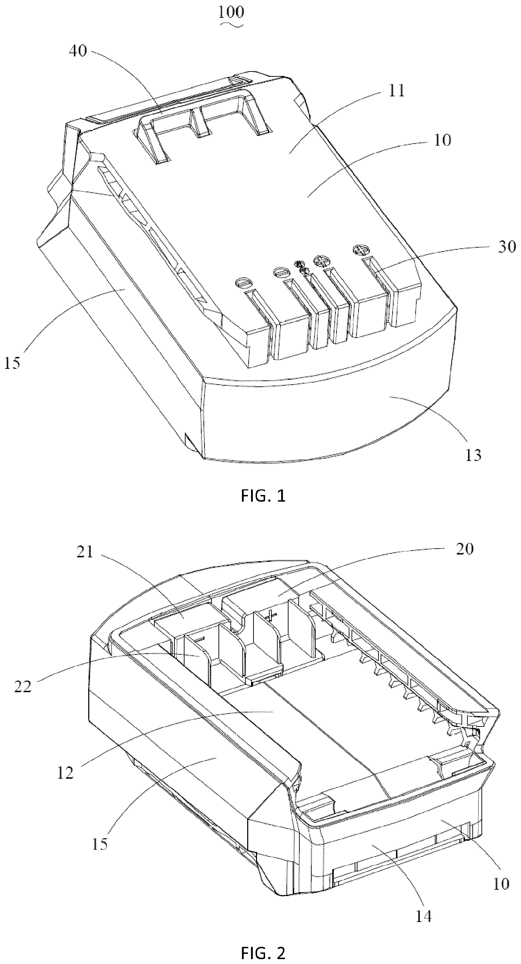

Referring to FIG. 1 and FIG.2, the present disclosure discloses an adapter 100 for solving the problem that the output interface of the single voltage battery pack is incompatible with the power tool interface of the power tool that can be coupled with the multi-voltage battery pack, so as to prevent user's single voltage battery pack from being in an idle state, thereby improving the utilization rate of the single voltage battery pack. The adapter 100 includes a housing 10, an input interface 20, an output interface 30 electrically connected to the input interface 20 and a latching mechanism 40.

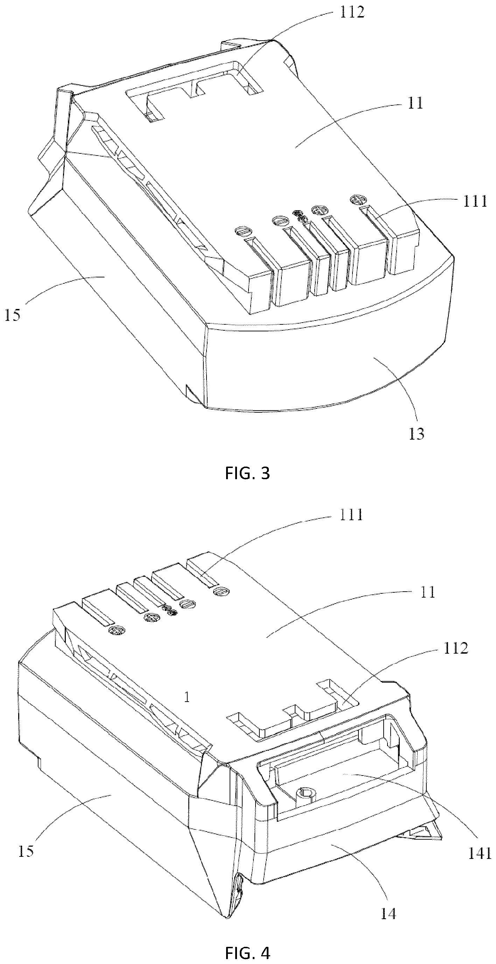

Referring to FIGS. 3-5, the housing 10 includes a top wall 11, a bottom wall 12 opposite to the top wall 11, a front wall 13 near the output interface 30, a rear wall 14 near the latching mechanism 40, and two side walls 15 at two sides of the top wall 11. The top wall 11, the bottom wall 12, the front wall 13, the rear wall 14, and the side walls 15 together define a receiving cavity (not shown) for receiving the input interface 20, the output interface 30 and the latching mechanism 40.

A terminal receiving groove 111 is formed at an end of the top wall 11 close to the front wall 13 and in communication with the receiving cavity. A retaining groove 112 in communication with the receiving cavity is provided on an end of the top wall 11 close to the rear wall 14. An input terminal groove 131 in communication with the receiving cavity is arranged between the front wall 13 and the bottom wall 12. The rear wall 14 is provided with a pressing groove 141 in communication with the receiving cavity. The bottom wall 12 and the side wall 15 jointly form an inserting portion 151 for slidingly inserting the output interface provided on the single voltage battery pack. In this embodiment, the inserting portion 151 is an open receiving groove. The side wall 15 is further provided with a sliding rail 152 on each side thereof facing the inserting portion 151 to guide the single voltage battery pack to slide into the inserting portion 151. In this embodiment, the sliding rail 152 is a groove. However, it is understood that the sliding rail 152 may also be a protrusion, and the present disclosure is not limited to the specific structure of the sliding rail 152.

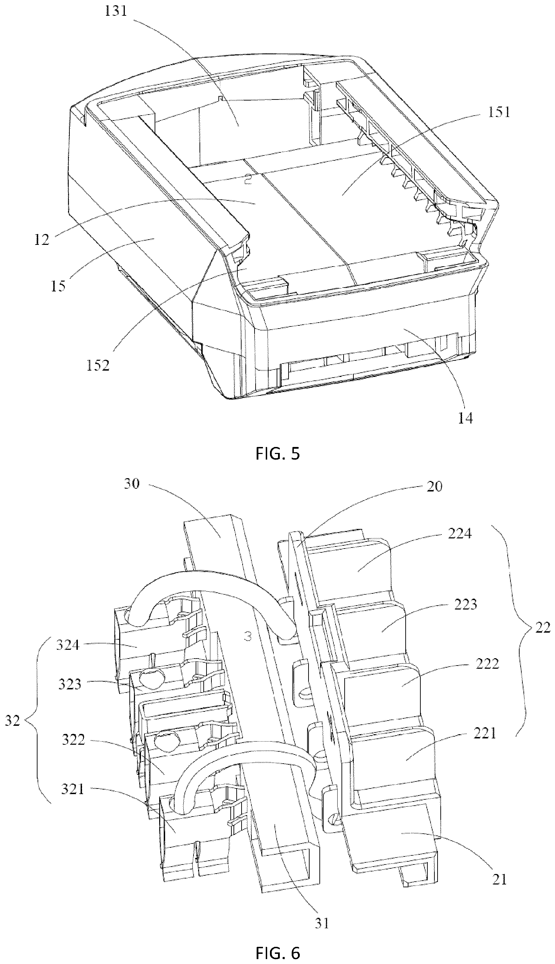

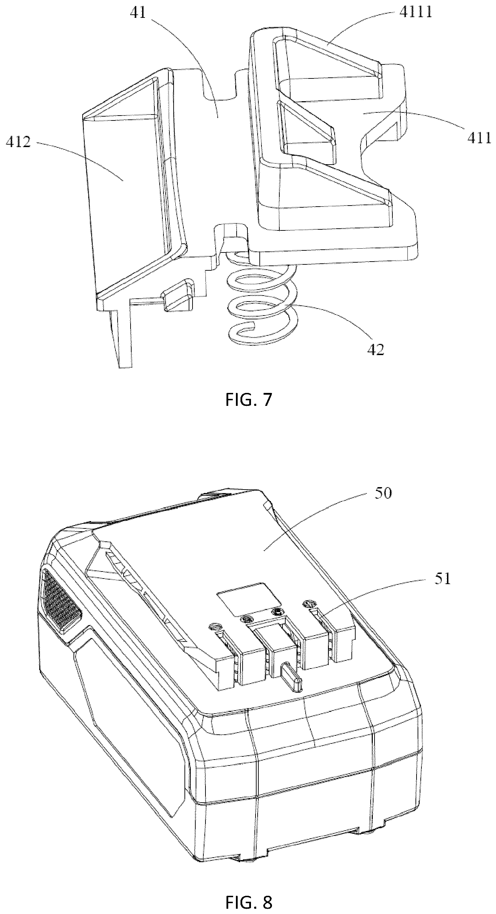

The input interface 20 is coupled to the output interface provided on the single voltage battery pack to obtain a single output voltage of the single voltage battery pack, and the single voltage battery interface is not matched with the power tool interface provided on the power tool. Referring to FIG. 2 and FIG. 5, the input interface 20 is installed in the input terminal groove 131 and is used to match with the single voltage battery pack 50 shown in FIG. 8. The single voltage battery pack 50 is provided with the single voltage battery interface 51. The single voltage battery interface 51 has only one coupling state, and thus can only output a single voltage. The single voltage battery pack has a positive output terminal, a negative output terminal. Referring to FIG. 6, the input interface 20 includes a base 21 and an input terminal group 22 mounted on the base 21. The input terminal group 22 includes a first input terminal 221, a second input terminal 222, a third input terminal 223, and a fourth input terminal 224, wherein the second input terminal 222 and the third input terminal 223 are located between the first input terminal 221 and the fourth input terminal 224. The first input terminal 221 is connectable to the positive output terminal of the single voltage battery pack, the fourth input terminal 224 is connectable to the negative output terminal of the single voltage battery pack.

The output interface 30 is electrically connected to the input interface 20 to obtain power from the single voltage battery. The output interface 30 is coupled to the power tool interface provided on the power tool to output voltage to the power tool. The power tool interface is matched with a multi-voltage battery interface disposed on a multi-voltage battery pack, and the multi-voltage battery interface has at least two coupling states so as to output different voltages in different coupling states. It can be understood that the specific structure of the multi-voltage battery interface disposed on the multi-voltage battery pack and the power tool interface matched with the multi-voltage battery interface may have various structures, for example, Chinese patent application No. 201780067581.2 discloses various multi-voltage battery interfaces and power tool interfaces matched with the multi-voltage battery interfaces. The present disclosure is intended to connect the single voltage battery interface provided on the single voltage battery pack with the power tool interface provided on the power tool that can be coupled with multi-voltage battery pack, therefore, the output interface 30 only needs to be matched with the power tool interface of the power tool. As for the specific structure of the output interface 30, the present disclosure is not particularly limited.

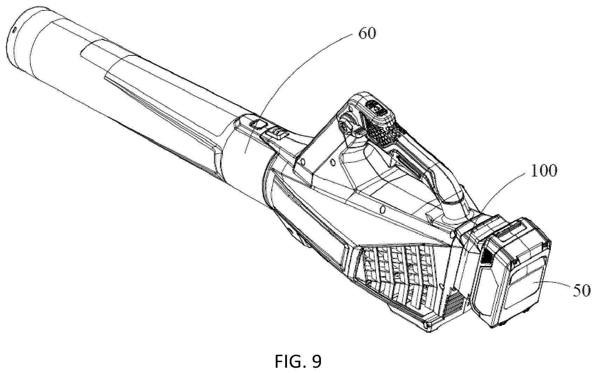

The output interface 30 in FIG. 6 is one of many embodiments of the present disclosure for coupling with the power tool 60 in FIG. 9. The power tool 60 is provided with the power tool interface (not shown) for matching with a multi-voltage battery interface provided on the multi-voltage battery pack, the multi-voltage battery interface has a plurality of coupling states to output different voltages in different coupling states.

The output interface 30 includes a base portion 31 and an output terminal group 32 mounted on the base portion 31 and located in the terminal receiving groove 111. The output terminal group 32 includes a first output terminal 321, a second output terminal 322, a third output terminal 333, and a fourth output terminal 334, wherein the second output terminal 332 and the third output terminal 333 are located between the first output terminal 331 and the fourth output terminal 334. The first input terminal 221 of the input interface 20 is electrically connected to the first output terminal 321, and the fourth input terminal 224 of the input interface 20 is electrically connected to the fourth output terminal 324, so that the output interface 30 obtains an output voltage from the single voltage battery pack. Furthermore, the first output terminal 321 is connectable to the positive input terminal of the power tool interface of the power tool, the fourth output terminal 324 is connectable to the negative input terminal of the power tool interface of the power tool.

Referring to FIG. 7, the latching mechanism 40 includes a main body 41 and an elastic element 42 engaged with the main body 41. The main body 41 has a latching arm 411 at an end thereof and a pressing arm 412 at the other end thereof. The latching arm 411 is partially received in the receiving cavity and partially protrudes outside of the receiving cavity from a retaining groove 112. A guiding wall 4111 is obliquely arranged on a side of the latching arm 411 facing the output interface 30. The pressing arm 412 at least partially protrudes out of the receiving cavity by the pressing groove 141. One end of the elastic element 42 is fixedly mounted on the main body 41, and the other end of the elastic element 42 is mounted on the housing 10. When the pressing arm 412 is pressed, the latching arm 411 is driven by the pressing arm 412 to move and enter the receiving cavity from the retaining groove 112, and at this time, the elastic element 42 is in an elastic deformation state. When the pressing arm 412 is released, the pressing arm 412 or the latching arm 411 is reset under the action of the elastic element 42. In the present embodiment, the elastic element 42 is a spring, but in other embodiments, the elastic element 42 may also be an elastic plastic, an elastic sheet, or the like.

Referring to FIG. 1, FIG. 2, FIG. 7 and FIG. 9, when using the adaptor 100 of the present disclosure, firstly, by pressing the pressing arm 412 the latching arm 411 is brought into entering the receiving cavity, and then match the power tool interface of the power tool 60 with the output interface 30 of the adaptor 100.When releasing the pressing arm 412, the latching arm 411 resets under the action of the elastic element 42 and locks with a retaining structure disposed on the power tool 60 to fix the adaptor 100 on the power tool 60. After that, match the single voltage battery interface of the single voltage battery pack 50 with the input interface 20 of the adaptor 100. In fact, when the adapter 100 is sliding into the power tool 60, the guiding wall 4111 cooperates with a corresponding housing on the power tool 60 and slowly enters the receiving cavity under the action of the corresponding housing, that is the user needs not to press the pressing arm 412 when sliding the adapter 100 into the power tool 60.

The invention also discloses a power tool system, which comprises a power tool provided with a power tool interface, a single voltage battery pack provided with a single voltage battery interface and an adapter 100. The power tool interface of the power tool is used for matching with a multi-voltage battery interface, which is disposed on a multi-voltage battery pack and has at least two coupling states so as to output at least two different voltages in different coupling states. The single voltage battery interface disposed on the single voltage battery pack is incompatible with the power tool interface of the power tool that is couplable with multi-voltage battery pack.

Compared with the prior art, the adapter 100 of the present disclosure can electrically connect the single voltage battery interface of the single voltage battery pack with the power tool interface of the power tool that is matched with the multi-voltage battery pack, so that the power tool that can be matched with the multi-voltage battery pack also can be powered by the single voltage battery pack to improve the utilization rate of the old single voltage battery pack.

Although the present disclosure has been described in detail with reference to the preferred embodiments, it will be understood by those skilled in the art that various changes may be made, and equivalents may be substituted for elements thereof within the scope of the appended claims.

## Claims

1. An adapter (100) for connecting a single voltage battery pack (50) to a power tool (60), the single voltage battery pack (50) is configured to output only one voltage and is provided with a single voltage battery interface (51), the power tool (60) is detachably coupled with a multi-voltage battery pack and provided with a power tool interface, the single voltage battery interface (51) is not couplable to the power tool interface, the adapter (100) comprising:
a housing (10);
an input interface (20) disposed in the housing (10) and provided for electrically and mechanically coupling with the single voltage battery interface (51) of the single voltage battery pack (50);
an output interface (30) disposed in the housing (10) and provided for electrically and mechanically coupling with the power tool interface of the power tool (60); and
the input interface (20) is electrically connected to the output interface (30);
**characterized in that** the power tool (60) is powerable by the single voltage battery pack (50) when the single voltage battery interface (51) of the single voltage battery pack (50) is coupled with the input interface (20) of the adapter (100) and the power tool interface of the power tool is coupled with the output interface (30) of the adapter (100)

2. The adapter (100) according to claim 1, wherein the housing (10) forms an inserting portion (151) on a side thereof directed away from the output interface (30) and the single voltage battery interface (51) of the single voltage battery pack (50) is slidable into the inserting portion.

3. The adapter (100) according to claim 2, wherein the housing (10) comprises a top wall (11), a bottom wall (12) opposite to the top wall (11), a front wall (13) close to the output interface (30), a rear wall (14) opposite to the front wall (13) and two side walls (15) located at two sides of the top wall (11), and the side wall (15) is further provided with a sliding rail (152) on a side thereof facing the inserting portion (151).

4. The adapter (100) according to claim 3, wherein the top wall (11), the bottom wall (12), the front wall (13), the rear wall (14) and the side walls (15) cooperatively surround and define a receiving cavity, an input terminal groove (131) in communication with the receiving cavity is formed between the front wall (13) and the bottom wall (12), and the input interface (20) is mounted in the input terminal groove (131).

5. The adapter according to any one of claims 1 to 4, wherein the input interface (20) comprises a first input terminal (221), a second input terminal (222), a third input terminal (223) and a fourth input terminal (224), wherein the second input terminal (222) and the third input terminal (223) are positioned between the first input terminal (221) and the fourth input terminal (224); the output interface (30) comprises a first output terminal (321), a second output terminal (322), a third output terminal (333) and a fourth output terminal (334), wherein the second output terminal (332) and the third output terminal (333) are positioned between the first output terminal (331) and the fourth output terminal (334); the first input terminal (221) is electrically connected to the first output terminal (331), and the fourth input terminal (224) is electrically connected to the fourth output terminal (334).

6. The adapter (100) according to any one of claims 1 to 3, wherein the adapter further comprises a latching mechanism (40) mounted on the housing (10); the housing (10) is provided with a receiving cavity; the latching mechanism (40) comprises a latching arm (411) and a pressing arm (412), the latching arm (411) is partially received in the receiving cavity and partially protrudes outside of the receiving cavity, the pressing arm (412) is linked with the latching arm (411) and partially protrudes out of the receiving cavity, the latching arm (411) enterable into the receiving cavity when the pressing arm (412) is pressed on.

7. The adapter (100) according to claim 6, wherein the latching mechanism (40) also comprises an elastic element (42) matched with the pressing arm (412) or the latching arm (411); the elastic element (42) is elastically deformable when the pressing arm (412) is pressed; and the pressing arm (412) or the latching arm (411) is resettable under an action of the elastic element (42) when the pressing arm (412) is released.

8. The adapter according to claim 6 or 7, wherein a guiding wall (4111) is obliquely arranged on a side of the latching arm (411) facing the output interface (30).

9. A power tool system, comprising:
an adaptor (100) according to any one of claims 1 to 8,
a power tool (60) provided with a power tool interface for coupling with a multi-voltage battery pack; and
a single voltage battery pack (50).

10. A power tool system, comprising:
an adaptor (100) according to any one of claims 1 to 8,
a multi-voltage battery pack configured to output at least two different voltages;
a power tool provided with a power tool interface for electrically and mechanically coupling with the multi-voltage battery pack; and
a single voltage battery pack (50).

## Patentansprüche

1. Adapter (100) zum Verbinden eines Einzelspannungs-Batteriepacks (50) mit einem Elektrowerkzeug (60), wobei das Einzelspannungs-Batteriepack (50) so konfiguriert ist, dass es nur eine Spannung ausgibt und mit einer Einzelspannungs-Batterieschnittstelle (51) versehen ist, das Elektrowerkzeug (60) lösbar mit einem Mehrspannungs-Batteriepack gekoppelt ist und mit einer Elektrowerkzeugschnittstelle versehen ist, die Einzelspannungs-Batterieschnittstelle (51) nicht mit der Elektrowerkzeugschnittstelle koppelbar ist, wobei der Adapter (100) Folgendes umfasst:
ein Gehäuse (10);
eine Eingangsschnittstelle (20), die in dem Gehäuse (10) angeordnet ist und zur elektrischen und mechanischen Kopplung mit der Einzelspannungs-Batterieschnittstelle (51) des Einzelspannungs-Batteriepacks (50) bereitgestellt ist;
eine Ausgangsschnittstelle (30), die in dem Gehäuse (10) angeordnet ist und zur elektrischen und mechanischen Kopplung mit der Elektrowerkzeugschnittstelle des Elektrowerkzeugs (60) bereitgestellt ist; und
die Eingangsschnittstelle (20) mit der Ausgangsschnittstelle (30) elektrisch verbunden ist;
**dadurch gekennzeichnet, dass** das Elektrowerkzeug (60) durch das Einzelspannungs-Batteriepack (50) mit Energie versorgt werden kann, wenn die Einzelspannungs-Batterieschnittstelle (51) des Einzelspannungs-Batteriepacks (50) mit der Eingangsschnittstelle (20) des Adapters (100) gekoppelt ist und die Elektrowerkzeugschnittstelle des Elektrowerkzeugs mit der Ausgangsschnittstelle (30) des Adapters (100) gekoppelt ist.

2. Adapter (100) nach Anspruch 1, wobei das Gehäuse (10) einen Einführungsabschnitt (151) auf einer Seite desselben bildet, die von der Ausgangsschnittstelle (30) abgewandt ist, und die Einzelspannungs-Batterieschnittstelle (51) des Einzelspannungs-Batteriepacks (50) in den Einführungsabschnitt gleitbar ist.

3. Adapter (100) nach Anspruch 2, wobei das Gehäuse (10) eine obere Wand (11), eine der oberen Wand (11) gegenüberliegende untere Wand (12), eine vordere Wand (13) nahe der Ausgangsschnittstelle (30), eine der vorderen Wand (13) gegenüberliegende hintere Wand (14) und zwei seitliche Wände (15) umfasst, die sich an zwei Seiten der oberen Wand (11) befinden, und die seitliche Wand (15) weiter mit einer Gleitschiene (152) an einer dem Einführungsabschnitt (151) zugewandten Seite derselben bereitgestellt ist.

4. Adapter (100) nach Anspruch 3, wobei die obere Wand (11), die untere Wand (12), die vordere Wand (13), die hintere Wand (14) und die seitlichen Wände (15) zusammenwirkend einen Aufnahmehohlraum umgeben und definieren, eine mit dem Aufnahmehohlraum in Verbindung stehende Eingangsanschlussrille (131) zwischen der vorderen Wand (13) und der unteren Wand (12) ausgebildet ist und die Eingangsschnittstelle (20) in der Eingangsanschlussrille (131) montiert ist.

5. Adapter nach einem der Ansprüche 1 bis 4, wobei die Eingangsschnittstelle (20) einen ersten Eingangsanschluss (221), einen zweiten Eingangsanschluss (222), einen dritten Eingangsanschluss (223) und einen vierten Eingangsanschluss (224) umfasst, wobei der zweite Eingangsanschluss (222) und der dritte Eingangsanschluss (223) zwischen dem ersten Eingangsanschluss (221) und dem vierten Eingangsanschluss (224) angeordnet sind; die Ausgangsschnittstelle (30) einen ersten Ausgangsanschluss (321), einen zweiten Ausgangsanschluss (322), einen dritten Ausgangsanschluss (333) und einen vierten Ausgangsanschluss (334) umfasst, wobei der zweite Ausgangsanschluss (332) und der dritte Ausgangsanschluss (333) zwischen dem ersten Ausgangsanschluss (331) und dem vierten Ausgangsanschluss (334) angeordnet sind; der erste Eingangsanschluss (221) elektrisch mit dem ersten Ausgangsanschluss (331) verbunden ist, und der vierte Eingangsanschluss (224) elektrisch mit dem vierten Ausgangsanschluss (334) verbunden ist.

6. Adapter (100) nach einem der Ansprüche 1 bis 3, wobei der Adapter weiter einen Verriegelungsmechanismus (40) umfasst, der auf dem Gehäuse (10) montiert ist; das Gehäuse (10) mit einem Aufnahmehohlraum versehen ist; der Verriegelungsmechanismus (40) einen Verriegelungsarm (411) und einen Druckarm (412) umfasst, wobei der Verriegelungsarm (411) teilweise in dem Aufnahmehohlraum aufgenommen ist und teilweise aus dem Aufnahmehohlraum herausragt, der Druckarm (412) mit dem Verriegelungsarm (411) verbunden ist und teilweise aus dem Aufnahmehohlraum herausragt, der Verriegelungsarm (411) in den Aufnahmehohlraum eintreten kann, wenn der Druckarm (412) gedrückt wird.

7. Adapter (100) nach Anspruch 6, wobei der Verriegelungsmechanismus (40) auch ein elastisches Element (42) umfasst, das mit dem Druckarm (412) oder dem Verriegelungsarm (411) übereinstimmend ist; das elastische Element (42) elastisch verformbar ist, wenn der Druckarm (412) gedrückt wird; und der Druckarm (412) oder der Verriegelungsarm (411) unter der Wirkung des elastischen Elements (42) rückstellbar ist, wenn der Druckarm (412) gelöst wird.

8. Adapter nach Anspruch 6 oder 7, wobei eine Führungswand (4111) schräg auf einer der Ausgangsschnittstelle (30) zugewandten Seite des Verriegelungsarms (411) angeordnet ist.

9. Elektrowerkzeugsystem, umfassend:
einen Adapter (100) nach einem der Ansprüche 1 bis 8,
ein Elektrowerkzeug (60), das mit einer Elektrowerkzeugschnittstelle zum Koppeln mit einem Mehrspannungs-Batteriepack versehen ist; und
ein Einzelspannungs-Batteriepack (50).

10. Elektrowerkzeugsystem, umfassend:
einen Adapter (100) nach einem der Ansprüche 1 bis 8,
ein Mehrspannungs-Batteriepack, das so konfiguriert ist, dass es mindestens zwei verschiedene Spannungen ausgibt;
ein Elektrowerkzeug, das mit einer Elektrowerkzeugschnittstelle zum elektrischen und mechanischen Koppeln mit dem Mehrspannungs-Batteriepack versehen ist; und
ein Einzelspannungs-Batteriepack (50).

## Revendications

1. Adaptateur (100) pour raccorder un bloc-batterie à tension unique (50) à un outil électrique (60), le bloc-batterie à tension unique (50) est configuré pour délivrer en sortie uniquement une tension et est pourvu d'une interface de batterie à tension unique (51), l'outil électrique (60) est couplé de manière détachable à un bloc-batterie à tension multiple et pourvu d'une interface d'outil électrique, l'interface de batterie à tension unique (51) ne peut pas être couplée à l'interface d'outil électrique, l'adaptateur (100) comprenant :
un boîtier (10) ;
une interface d'entrée (20) disposée dans le boîtier (10) et fournie pour se coupler électriquement et mécaniquement à l'interface de batterie à tension unique (51) du bloc-batterie à tension unique (50) ;
une interface de sortie (30) disposée dans le boîtier (10) et fournie pour se coupler électriquement et mécaniquement à l'interface d'outil électrique de l'outil électrique (60) ; et
l'interface d'entrée (20) est électriquement raccordée à l'interface de sortie (30) ;
**caractérisé en ce que** l'outil électrique (60) peut être alimenté par le bloc-batterie à tension unique (50) lorsque l'interface de batterie à tension unique (51) du bloc-batterie à tension unique (50) est couplée à l'interface d'entrée (20) de l'adaptateur (100) et l'interface d'outil électrique de l'outil électrique est couplée à l'interface de sortie (30) de l'adaptateur (100).

2. Adaptateur (100) selon la revendication 1, dans lequel le boîtier (10) forme une portion d'insertion (151) sur un côté de celui-ci dirigée à l'opposé de l'interface de sortie (30) et l'interface de batterie à tension unique (51) du bloc-batterie à tension unique (50) peut coulisser dans la portion d'insertion.

3. Adaptateur (100) selon la revendication 2, dans lequel le boîtier (10) comprend une paroi supérieure (11), une paroi inférieure (12) opposée à la paroi supérieure (11), une paroi avant (13) proche de l'interface de sortie (30), une paroi arrière (14) opposée à la paroi avant (13) et deux parois latérales (15) situées au niveau de deux côtés de la paroi supérieure (11), et la paroi latérale (15) est en outre pourvue d'un rail coulissant (152) sur un côté de celle-ci faisant face à la portion d'insertion (151).

4. Adaptateur (100) selon la revendication 3, dans lequel la paroi supérieure (11), la paroi inférieure (12), la paroi avant (13), la paroi arrière (14) et les parois latérales (15) entourent de manière coopérative et définissent une cavité de réception, une rainure de borne d'entrée (131) en communication avec la cavité de réception est formée entre la paroi avant (13) et la paroi arrière (12), et l'interface d'entrée (20) est montée dans la rainure de borne d'entrée (131).

5. Adaptateur selon l'une quelconque des revendications 1 à 4, dans lequel l'interface d'entrée (20) comprend une première borne d'entrée (221), une deuxième borne d'entrée (222), une troisième borne d'entrée (223) et une quatrième borne d'entrée (224), dans lequel la deuxième borne d'entrée (222) et la troisième borne d'entrée (223) sont positionnées entre la première borne d'entrée (221) et la quatrième borne d'entrée (224) ; l'interface de sortie (30) comprend une première borne de sortie (321), une deuxième borne de sortie (322), une troisième borne de sortie (333) et une quatrième borne de sortie (334), dans lequel la deuxième borne de sortie (332) et la troisième borne de sortie (333) sont positionnées entre la première borne de sortie (331) et la quatrième borne de sortie (334) ; la première borne d'entrée (221) est électriquement raccordée à la première borne de sortie (331), et la quatrième borne d'entrée (224) est électriquement raccordée à la quatrième borne de sortie (334).

6. Adaptateur (100) selon l'une quelconque des revendications 1 à 3, dans lequel l'adaptateur comprend en outre un mécanisme de verrouillage (40) monté sur le boîtier (10); le boîtier (10) est pourvu d'une cavité de réception ; le mécanisme de verrouillage (40) comprend un bras de verrouillage (411) et un bras de pression (412), le bras de verrouillage (411) est partiellement reçu dans la cavité de réception et fait partiellement saillie à l'extérieur de la cavité de réception, le bras de pression (412) est relié au bras de verrouillage (411) et fait partiellement saillie hors de la cavité de réception, le bras de verrouillage (411) pouvant entrer dans la cavité de réception lorsque le bras de pression (412) est pressé.

7. Adaptateur (100) selon la revendication 6, dans lequel le mécanisme de verrouillage (40) comprend également un élément élastique (42) correspondant au bras de pression (412) ou au bras de verrouillage (411) ; l'élément élastique (42) est élastiquement déformable lorsque le bras de pression (412) est pressé ; et le bras de pression (412) ou le bras de verrouillage (411) peut être remis à l'état initial sous une action de l'élément élastique (42) lorsque le bras de pression (412) est relâché.

8. Adaptateur selon la revendication 6 ou 7, dans lequel une paroi de guidage (4111) est agencée de manière oblique sur un côté du bras de verrouillage (411) faisant face à l'interface de sortie (30).

9. Système d'outil électrique, comprenant :
un adaptateur (100) selon l'une quelconque des revendications 1 à 8,
un outil électrique (60) pourvu d'une interface d'outil électrique pour se coupler à un bloc-batterie à tension multiple ; et
un bloc-batterie à tension unique (50).

10. Système d'outil électrique, comprenant :
un adaptateur (100) selon l'une quelconque des revendications 1 à 8,
un bloc-batterie à tension multiple configuré pour délivrer en sortie au moins deux tensions différentes ;
un outil électrique pourvu d'une interface d'outil électrique pour se coupler électriquement et mécaniquement au bloc-batterie à tension multiple ; et
un bloc-batterie à tension unique (50).
